# EUROPÄISCHE PATENTSCHRIFT

(11) **EP 3 287 339 B1**
(45) Veröffentlichungstag und Bekanntmachung des Hinweises auf die Patenterteilung: **25.09.2019**
(21) Anmeldenummer: 17192348.5
(22) Anmeldetag: 21.08.2015
(51) Int. Cl.: B62C 3/00, B62D 63/06

(54) **KUTSCHE**
CARRIAGE
CALÈCHE

(43) Veröffentlichungstag der Anmeldung: 28.02.2018
(62) Teilanmeldung aus: 15002488.3
(73) Patentinhaber: Wührmann, Heiko, 27321 Thedinghausen (DE)
(72) Erfinder: Wührmann, Heiko, 27321 Thedinghausen (DE)
(74) Vertreter: Rehmann, Thorsten

(56) Entgegenhaltungen:
- DE-U1- 20 307 523
- FR-A1- 2 913 944
- NL-C2- 1 022 476
- US-A- 1 336 645
- US-A- 2 080 709
- US-A- 3 979 133
- US-A1- 2007 145 717

## Beschreibung

Die Erfindung betrifft eine Kutsche mit einem Fahrgestell, einem auf dem Fahrgestell angeordneten Aufbau, einer Deichsel und mindestens einem Paar am Fahrgestell angeordneter Räder, die in einer Spurweite zueinander beabstandet sind.

Eine solche Kutsche ist beispielsweise aus der DE 20 2004 016 528 U1 oder der DE 203 07 523 U1 bekannt. Kutschen werden von einem Pferd gezogen. Während Kutschen vor der Automobilisierung notwendige Transportmittel für den Landweg waren, werden sie heute nur noch als Freizeitfahrzeuge verwendet. Sollen Kutsche und Pferd von einem Ort zum anderen, beispielsweise zu einem Turnier oder zum Urlaubsort, transportiert werden, so ist dies mit einem nicht unerheblichen Aufwand verbunden. In der Regel werden hierzu zwei Zugfahrzeuge mit Anhängern benötigt, wobei ein Anhänger das Pferd und der andere Anhänger die Kutsche transportiert oder es wird ein entsprechend großer LKW benötigt, der Pferd und Kutsche gemeinsam transportieren kann.

Aus der DE 20 2012 003 357 U1 ist eine einachsige Pferdekutsche mit einem einklappbaren Fahrgestell bekannt, die in das freie Abteil neben einem Pferd in einem Zweier-Pferdeanhänger aufgenommen werden kann. Hierzu ist vorgesehen, dass beide Radgabeln inklusive der Räder um in Längsrichtung angeordnete Schwenkachsen unter oder über den Wagenboden geschwenkt werden können. Die Schwenkachsen stellen gleichzeitig die Längsträger des Wagengestells dar. Ein solcher Klappmechanismus ist nur an einachsigen Kutschen realisierbar.

Von dieser Problemstellung ausgehend soll die beschriebene einachsige oder mehrachsige Kutsche so verbessert werden, dass sie raumsparend transportiert werden kann, und insbesondere in einem Abteil eines Pferdeanhängers untergebracht werden kann.

Zur Problemlösung zeichnet sich eine gattungsgemäße Kutsche dadurch aus, dass jedes Rad an je einem Lenker drehbar gelagert ist, der um jeweils eine Hochachse schwenkbar am Fahrgestell befestigt ist, sodass jedes Rad zum Transport der Kutsche aus einer in Fahrtrichtung weisenden ersten Position in eine quer zur Fahrtrichtung weisenden zweiten Position schwenkbar ist.
Durch diese Ausgestaltung kann die Breite der Kutsche zum Transport reduziert werden, sodass ihr Platzbedarf so gering ist, dass sie in einem Abteil eines Pferdeanhängers untergebracht werden kann.

Bei einer zweiachsigen Kutsche (beispielsweise einem Buggy) können die Räder zur Mitte des Fahrgestells angeklappt werden, bei einer einachsigen Kutsche (beispielsweise einem Sulky oder einem Gig), deren Breite unter Umständen größer ist als ihre Länge, können die Räder vor und hinter den Aufbau geschwenkt und an diesen angelegt werden, sodass die Kutsche mit ihrer Breitseite in den Anhänger eingeschoben werden kann.

Wenn bei einer zweiachsigen Kutsche die Spurweiten der Achsen zum Transport der Kutsche unterschiedlich groß einstellbar sind, ist es insbesondere möglich, das Fahrgestell in Fahrtrichtung teleskopierbar auszugestalten, sodass die Kutsche in ihrer Länge verkürzt und die Räder der beiden Achsen nicht hintereinander, sondern zumindest teilweise übereinander liegend zur Mitte des Fahrgestells hin verschwenkbar sind, sodass die Kutsche zum Transport nicht nur schmaler, sondern auch verkürzbar ist, sodass sie in das Abteil eines Pferdeanhängers hineinpasst.

Das Fahrgestell kann dann zweiteilig ausgebildet sein, und das erste Paar Räder ist an einem vorderen Teil des Fahrgestells und das zweite Paar Räder an einem hinteren Teil des Fahrgestells angeordnet.

Vorzugsweise ist jeder Lenker zusätzlich über einen lösbaren Querlenker mit dem Fahrgestell verbunden. Dadurch kann beim Betrieb der Kutsche sichergestellt werden, dass die Spurweiten der Räder sicher eingehalten werden.

Bei einer einachsigen Kutsche (Sulky, Gig) sind zur Verkleinerung der Spurweite der Räder die Lenker in dieselbe Richtung verschwenkbar. Hierzu ist vorzugsweise jeder Lenker L-förmig gekröpft ausgebildet und auf einem Getriebeglied befestigt, wobei die zwei Getriebeglieder über mindestens ein drittes Getriebeglied miteinander gekoppelt sind. Unter einem gekröpften Lenker ist ein Lenker zu verstehen, der in der Ansicht L-förmig ausgebildet ist, wobei vorzugsweise der kurze Schenkel auf dem Getriebeglied befestigt ist. Der Lenker kann zweiteilig sein, wobei der lange und der kurze Schenkel miteinander verbunden sind.

Die Schenkel der L-förmig gekröpften Lenker sind jeweils über ein Gelenk miteinander verbunden. Zwischen einem der Schenkel und dem Aufbau ist vorzugsweise eine Feder, insbesondere vorzugsweise eine Blattfeder angeordnet.

Wenn die Getrieberäder Zahnräder sind, sind diese vorzugsweise über ein drittes Zahnrad verbunden, sodass die Lenker bzw. die an den Lenkern befestigten Räder in dieselbe Richtung geschwenkt werden.

Wenn die Getriebeglieder Scheiben sind, können diese über zwei parallel zueinander angeordnete Lenker miteinander gekoppelt werden, sodass auch hier sichergestellt ist, dass die Lenker bzw. die an den Lenkern befestigten Räder gleichzeitig in dieselbe Richtung verschwenkt werden. Wenn die einachsige Kutsche länger als breit ist, ist der Aufbau vorzugsweise mehrteilig, insbesondere zweiteilig ausgebildet und ein erster Aufbauteil ist schwenkbar an einem zweiten Aufbauteil befestigt.

Sowohl bei der zweiachsigen als auch bei der einachsigen Kutsche ist die vorzugsweise aus zwei Deichselstangen gebildete Deichsel lösbar am Fahrgestell befestigt und kann beim Transport dann neben die gefaltete bzw. zusammengeklappte Kutsche im Pferdeanhänger untergebracht werden.

Mit Hilfe einer Zeichnung sollen Ausführungsbeispiele der Erfindung näher beschrieben werden.

Es zeigen:
- Figur 1a -: die perspektivische Ansicht einer nicht erfindungsgemäßen zweiachsigen Kutsche vom Typ Buggy;
- Figur 1b -: die Vorderachse der Kutsche nach Figur 1a mit der Deichsel in perspektivischer Teildarstellung;
- Figur 1c -: das Fahrgestell der Kutsche nach Figur 1a in perspektivischer Darstellung;
- Figur 1d -: die Darstellung nach Figur 1c bei Kurvenfahrt;
- Figur 1e -: das teilweise gefaltete Fahrgestell der Kutsche nach Figur 1a;
- Figur 1f -: das gefaltete Fahrgestell der Kutsche nach Figur 1a;
- Figur 1g -: einen Teil einer Achse der Kutsche nach Figur 1a;
- Figur 1h -: eine perspektivische Darstellung des Aufbaus der Kutsche nach Figur 1a;
- Figur 1i -: die Darstellung nach Figur 1h zu Beginn der Faltung;
- Figur 1j -: die gefaltete Kutsche nach Figur 1a;
- Figur 2a -: die perspektivische Ansicht einer erfindungsgemäßen einachsigen Kutsche vom Typ Gig;
- Figur 2b -: die Kutsche nach Figur 2a mit hochgeklapptem vorderen Teil des Aufbaus;
- Figur 2c -: die Kutsche nach Figur 2b mit vollständig hochgeklapptem Vorderteil;
- Figur 2d -: eine Teilansicht gemäß Sichtpfeil IId nach Figur 2c;
- Figur 2e -: die Ansicht gemäß Sichtpfeil IIe nach Figur 2f;
- Figur 2f -: die Ansicht gemäß Sichtpfeil IIf nach Figur 2e;
- Figur 3a -: die Unteransicht auf die Kutsche nach Figur 2 in einer ersten Ausführungsform;
- Figur 3b -: die Ansicht nach Figur 3a zu Beginn der Schwenkbewegung der Räder;
- Figur 3c -: die Darstellung nach Figur 3a mit vollständig verschwenkten Rädern;
- Figur 3d -: die Darstellung nach Figur 2b ohne Gehäuseabdeckung;
- Figur 4a -: die Unteransicht auf die Kutsche nach Figur 3 bei einem zweiten Ausführungsbeispiel;
- Figur 4b -: die Ansicht nach Figur 4a zu Beginn der Schwenkbewegung der Räder;

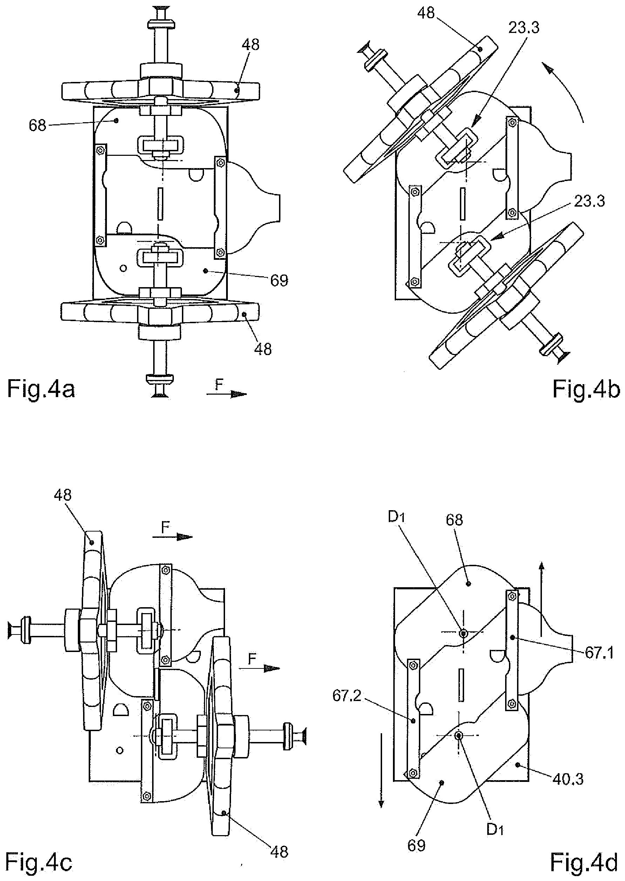

- Figur 4.c -: die Darstellung nach Figur 4.a mit vollständig verschwenkten Rädern;
- Figur 4d -: die Darstellung nach Figur 4b ohne Lenker und Räder.

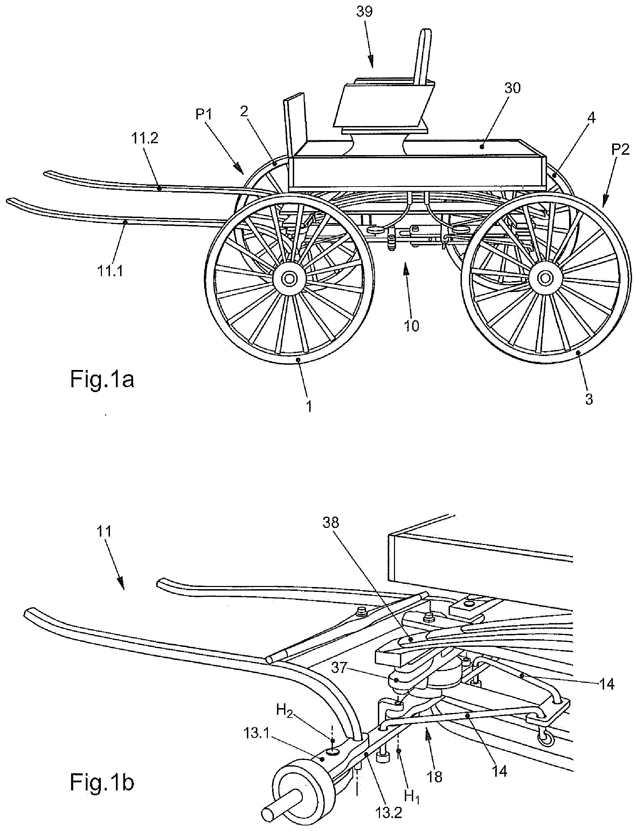

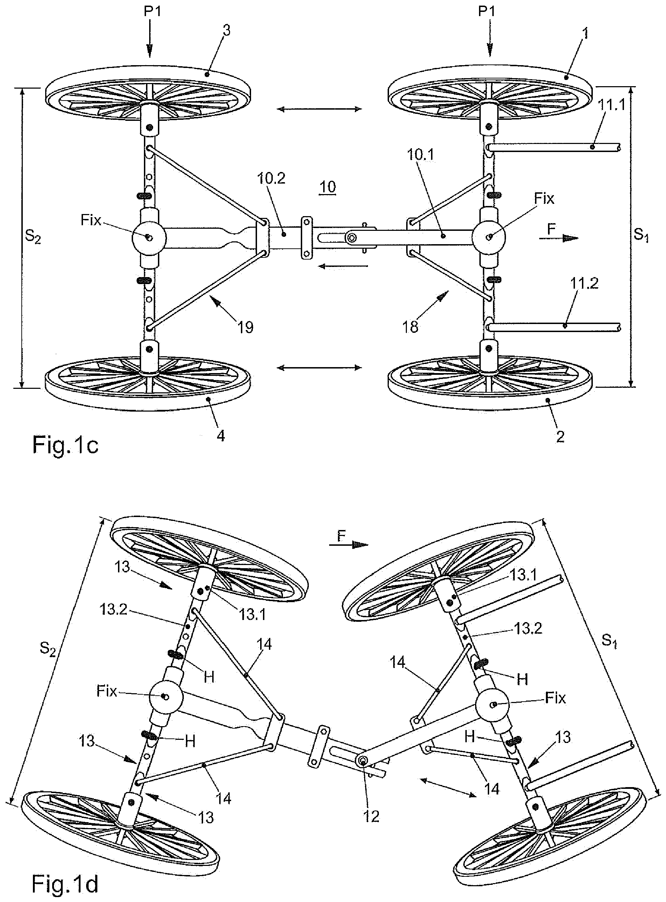

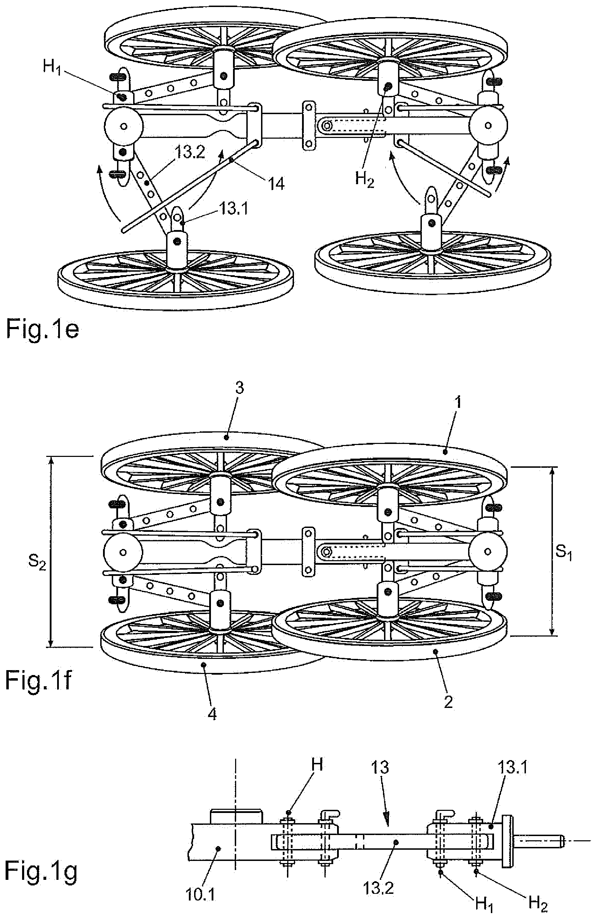

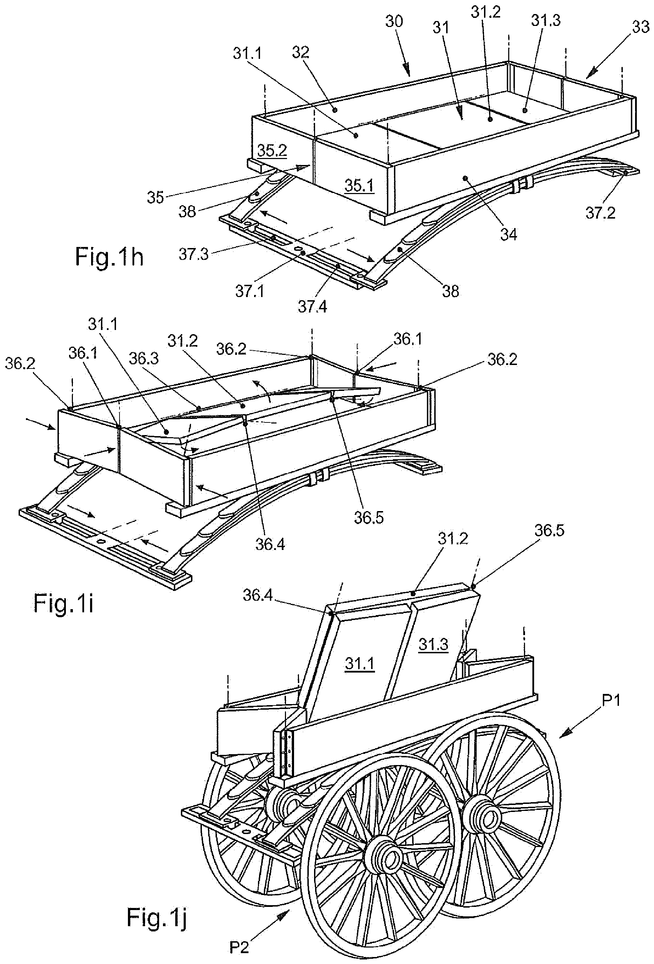

Anhand der Figuren 1a bis 1j soll zunächst eine nicht erfindungsgemäß ausgestaltete Kutsche vom Typ Buggy, die faltbar bzw. klappbar ausgebildet ist, beschrieben werden. Die Kutsche besteht aus einem Fahrgestell 10 mit zwei Paar P₁, P₂ Rädern 1, 2, die an einer Vorderachse 18 bzw. an einer Hinterachse 19 drehbar gelagert sind. An der Vorderachse 18 ist eine Deichsel 11 mit zwei Deichselstangen 11.1, 11.2 befestigt. Über zwei Blattfedern 38 ist der Aufbau 30 auf dem Fahrgestell 10 befestigt. Die Räder 1, 2 sind an der Vorderachse 18 in einer ersten Spurweite S₁ und die Räder 3, 4 an der Hinterachse 19 in einer zweiten Spurweite S₂ zueinander beabstandet angeordnet. Das Fahrgestell 10 besteht aus einem vorderen Teil 10.1 und einem hinteren Teil 10.2. Über ein Gelenk 12 sind die beiden Teile 10.1, 10.2 zueinander verschwenkbar verbunden. Wird das Gelenk 12 gelöst, können der vordere Teil 10.1 und der hintere Teil 10.2 relativ zueinander verschoben werden, sodass das Fahrgestell 10 teleskopierbar ausgebildet ist. Die Vorderachse 18 und die Hinterachse 19 sind an sich identisch ausgebildet. Die Räder 1, 2, 3, 4 sind jeweils an einem Lenker 13 drehbar gelagert, der um eine Hochachse H₁ gegenüber dem Fahrgestell 10 verschwenkbar mit dem vorderen Fahrgestellteil 10.1 bzw. hinteren Fahrgestellteil 10.2 befestigt ist. Jeder Lenker 13 besteht aus den beiden Lenkerteilen 13.1 und 13.2. Die Lenkerteile 13.1, 13.2 sind um eine Hochachse H₂ zueinander verschwenkbar. Über je einen lösbaren Querlenker 14 werden die Lenker 13 gegenüber dem Fahrgestell 10 gesichert, sodass sie nicht ungewollt verschwenken können. Die Querlenker 14 können gegenüber dem Lenker 13 bzw. dem Fahrwerk 10 durch eine Verschraubung oder eine Versplintung (vgl. Figur 1b) gesichert sein.

Der Aufbau 30 besteht aus einem Boden 31, zwei Längsseiten 32, 34 und zwei Querseiten 33, 35. Die Querseiten 33, 35 bestehen aus zwei über ein erstes Scharnier 36.1 verbundenen Hälften 33.1, 33.2; 35.1, 35.2. Über ein zweites Scharnier 36.2 ist jede der Hälften 33.1, 33.2; 35.1, 35.2 mit einer der Längsseiten 32, 34 schwenkbar verbunden. Der Boden 30 ist dreiteilig ausgebildet und besteht aus dem mittleren Teil 31.2, das über ein drittes Scharnier 36.3 schwenkbar an der Längsseite 32 angeordnet ist. Das vordere Bodenteil 31.1 ist über ein viertes Scharnier 36.4 am mittleren Bodenteil 31.2 schwenkbar angeordnet und das hintere Bodenteil 31.3 ist über ein fünftes Scharnier 36.5 schwenkbar am mittleren Bodenteil 31.2 angeordnet. Auf dem Aufbau 30 ist ein Kutschbock 39 lösbar befestigt. Der Aufbau 30 ist auf zwei Blattfedern 38 aufgesetzt und mit diesen befestigt. Die beiden Enden der Blattfedern 38 laufen in einem Schlitten 37, der aus zwei Schienen 37.1 und 37.2 besteht. Die Schiene 37.1 ist mit dem vorderen Teil 10.1 des Fahrgestells 10 und die Schiene 37.2 mit dem hinteren Teil 10.2 des Fahrgestells 10 verbunden. In ihrer Längserstreckung sind die Schienen 37.1, 37.2 mit zwei Schlitzen 37.3, 37.4 versehen, in denen die Blattfedern 38 geführt gleiten können.

Der Faltvorgang der Kutsche erfolgt folgendermaßen:
Zunächst werden die Deichselstangen 11.1, 11.2 der Deichsel 11 von dem vorderen Fahrgestell 10.1 abgenommen und mindestens einer der Schlitten 37.1, 37.2 vom Fahrgestell 10 gelöst werden. Dann wird das Gelenk 12 gelöst und der vordere Teil 10.1 und der hintere Teil 10.2 des Fahrgestells 10 können dann aufeinander zugeschoben werden (vgl. Figur 1c). Die Querlenker 14 werden von den Lenkern 13 gelöst und die Verbindung zwischen den Lenkerteilen 13.1 und 13.2 wird ebenfalls gelöst (vgl. Figur 1e). Sodann wird der Boden 31 des Aufbaus 30 hochgeschwenkt und die Bodenteile 31.1, 31.3 von unten gegen das mittlere Bodenteil 31.2 angelegt. Durch Aufbringen seitlicher Kräfte auf die Räder werden die Lenkerteile 13.2 um die Hochachse H₁ gegen das Fahrgestell 10 verschwenkt. Die Lenker 13.1 werden dabei um die Hochachse H₂ in die entgegengesetzte Richtung wie die Lenker 13.2 verschwenkt, sodass die Räder 1, 2, 3, 4 parallel zum Fahrgestell 10 liegen. Die Querseiten 33, 35 werden nach innen in den Aufbau 30 hineingedrückt, sodass sich die Hälften 33.1, 33.2; 35.1, 35.2 um das erste Gelenk 36.1 verschwenken. Gleichzeitig gleiten die Blattfedern 38 in den Schlitzen 37.3, 37.4 des Schlittens 37 bzw. der Schienen 37.1, 37.2. In der endgültig gefalteten Position nimmt die Kutsche die in Figur 1j dargestellte Form an und ist so in ihrem Raumbedarf minimiert. Die Spurweite S₁ der Vorderachse ist kleiner als die Spurweite S₂ an der Hinterachse eingestellt worden, was durch eine entsprechende Länge der Lenker 13.1 realisiert wird. Dadurch kann beim Ineinanderschieben der Fahrgestellteile 10.1, 10.2 die Vorderachse zwischen die Hinterachse geschoben werden, sodass die Räder 1, 2, 3, 4 vollständig innerhalb des vom Aufbau 30 eingenommenen Längsraumes untergebracht werden können, sodass die Kutsche sowohl in der Breite als auch in der Länge minimiert ist, um in einen Pferdetransportanhänger eingeschoben zu werden.

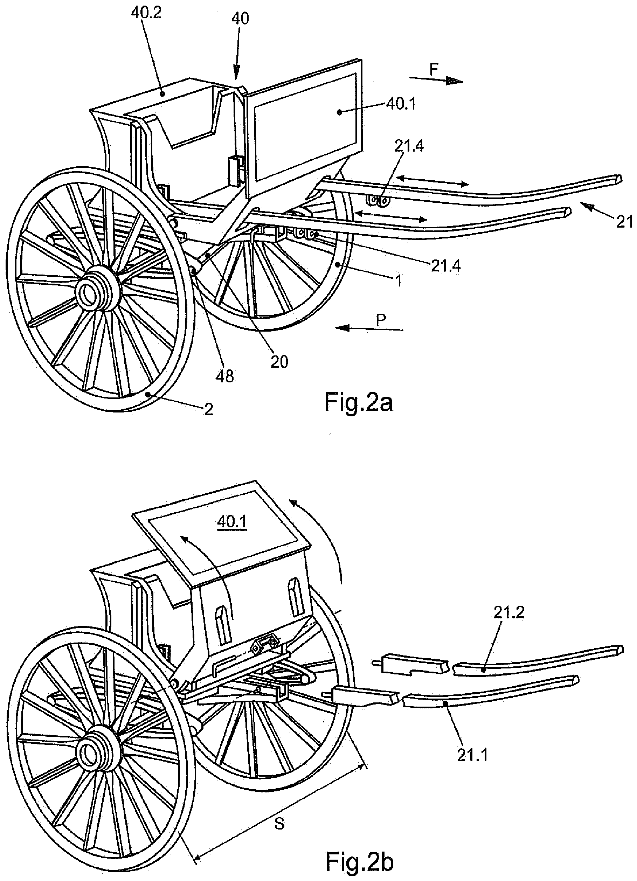

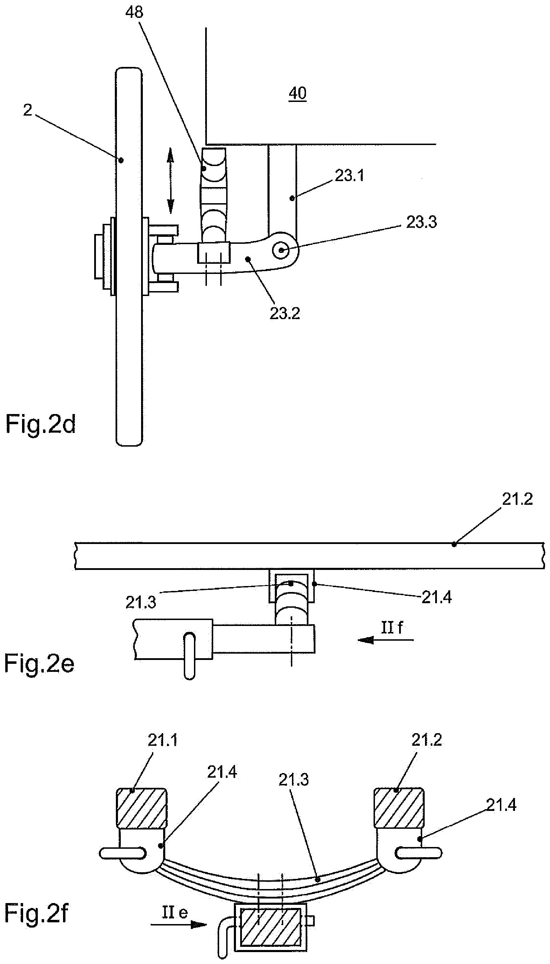

Anhand der Figuren 2a bis 4d soll nun die Erfindung an einer Kutsche vom Typ Gig beschrieben werden. Die zum Buggy beschriebenen Bauteile, die dieselbe Funktion übernehmen, sind der Einfachheit halber mit gleichen Bezugsziffern versehen.

Der Gig besteht aus dem Aufbau 40, der über Blattfedern 48 auf dem Fahrgestell 20 befestigt ist. Am Fahrgestell 20 oder am Aufbau 40 ist eine aus zwei Deichselstangen 21.1, 21.2 bestehende Deichsel 21 lösbar befestigt. Zwischen den beiden Deichselstangen (21.2, 21.2) ist eine Blattfeder (21.3) vorgesehen. Hierzu sind an den Deichselstangen (21.1, 21.2) Aufnahmen (21.2) vorgesehen.

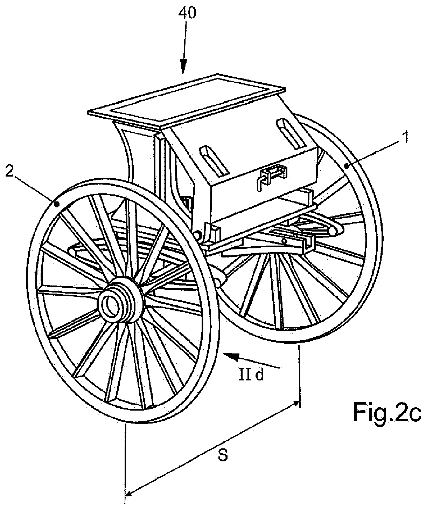

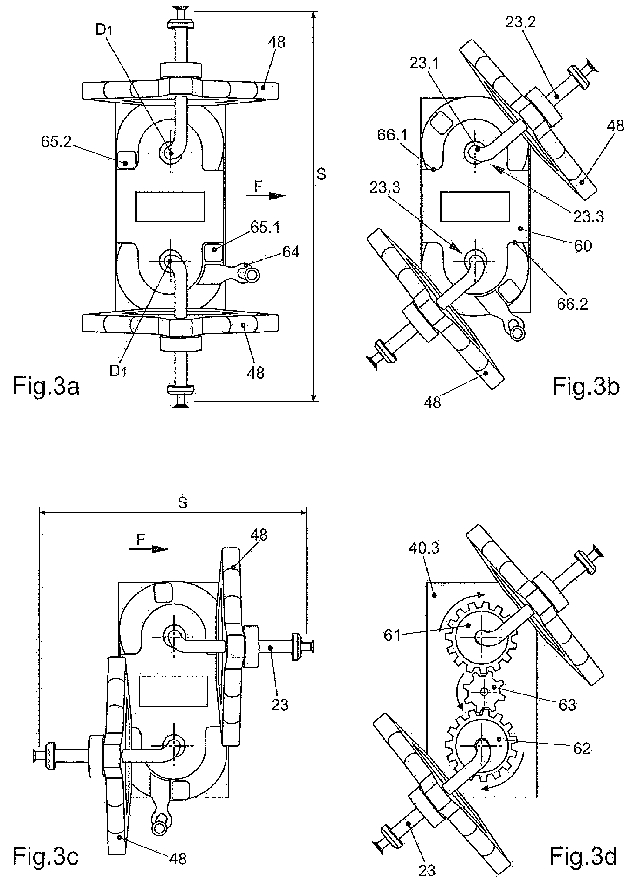

Der Aufbau ist zweiteilig und besteht aus dem vorderen Teil 40.1 und dem hinteren Teil 40.2 die zueinander verschwenkbar verbunden sind, sodass der vordere Teil 40.1 gegen den hinteren Teil 40.2 geschwenkt und auf den hinteren Teil 40.2 aufgelegt werden kann (vgl. Figuren 2b, 2c). Die Räder 1, 2 sind an je einem gekröpften Lenker 23 drehbar gelagert. Der Lenker 23 trägt auch die Blattfedern 48. Wie Figuren 3a bis 3d entnehmbar ist, ist der gekröpfte Lenker 23 in der Seitenansicht L-förmig ausgebildet, wobei der kürzere, im Wesentlichen vertikal angeordnete Schenkel 23.1 mit einem verschwenkbaren Getriebeglied 61 bzw. 62 verbunden ist und die beiden Schenkel (23.1, 23.2) über ein Gelenk (23.3) miteinander verbunden sind. Bei dem in den Figuren 3 gezeigten Ausführungsbeispiel sind die Getriebeglieder 61, 62 als Zahnräder ausgebildet, die über ein drittes Zahnrad 63 miteinander gekoppelt sind. Die Zahnräder 61, 62, 63 sind an der Unterseite 40.3 des Aufbaus 40 drehbar gelagert und werden von einer Abdeckung 60 abgedeckt und so vor Verschmutzung geschützt. Die Abdeckung 64 ist mehrteilig und weist Anschläge 66.1, 66.2 auf, die mit mit den Zahnrändern 61, 62 gekoppelten Zapfen 65.1, 65.2 zusammenwirken.

Figur 3a zeigt die Anordnung der gekröpften Lenker 23 in Fahrtstellung der Kutsche. Die Räder 1, 2 sind von den im Wesentlichen horizontal angeordneten Schenkeln 23.2 entfernt. Die Blattfedern 48 sind in Fahrtrichtung F ausgerichtet und zwischen dem Schenkel 23.2 und dem Aufbau 40 angeordnet. Die Zapfen 65.1, 65.2 liegen an den Anschlägen 66.1, 66.2 an. Über den Hebel 69 kann der mit dem Zahnrad 62 verbundene Lenker 23 im Uhrzeigersinn verschwenkt werden. Durch die Kopplung der Zahnräder 61, 62, 63, dreht sich der gegenüberliegende Lenker 23 entsprechend im Uhrzeigersinn mit, bis beide Lenker 23 um 90° verdreht sind. Die Blattfedern 548 stehen dann im rechten Winkel zur Fahrtrichtung F (vgl. Figur 3c).

An Stelle von Zahnrädern können die Getriebeglieder 61, 62 auch als Scheiben ausgebildet sein, wie das in Figuren 4a bis 4d abgebildete Ausführungsbeispiel zeigt. Die Scheiben 68.1, 68.2 sind um einen Drehpunkt D₁, D₂ drehbar an der Unterseite 40.3 des Aufbaus 40 gelagert und über zwei parallel zueinander angeordnete Lenker 67.1, 67.2 miteinander gekoppelt. Wird eine der Scheiben 68, 69 im Uhrzeigersinn verschwenkt, schwenkt die andere Scheibe 69, 68 entsprechend mit, sodass die Blattfedern 48, die in Figur 4a in Fahrtrichtung F ausgerichtet sind, die in Figur 4c dargestellte quer zur Fahrtrichtung F gerichtete Stellung einnehmen können.

Wie ein Vergleich der Figuren 3a und 3c bzw. 4a und 4c zeigt, ist der parallele Abstand der Blattfedern 48 und damit auch die Spurweite S zwischen den Rädern 1, 2 nach dem Verschwenken kleiner.

Der Klappvorgang der Kutsche läuft wie folgt ab. Zunächst wird die Deichsel 21 vom Aufbau 40 gelöst. Dann wird der vordere Teil 40.1 des Aufbaus 40 nach oben geschwenkt (Figur 2b) und auf den hinteren Teil 40.2 des Aufbaus 40 aufgelegt. Anschließend werden die Lenker 23 gegen den Uhrzeigersinn verschwenkt (vgl. Figur 3b), sodass die Räder 1, 2, die in Figur 2b in Fahrtrichtung F zeigen, an der in Fahrtrichtung F vorderen bzw. hinteren Seite des Aufbaus 40 anliegen (vgl. Figuren 3c, 4c). In diesem geklappten Zustand kann der Gig in ein Abteil eines Pferdeanhängers eingeschoben werden.

### Bezugszeichenliste

- 1: Rad
- 2: Rad
- 3: Rad
- 4: Rad
- 10: Fahrgestell

- 10.1: vorderer Teil
- 10.2: hinterer Teil
- 11: Deichsel
- 11.1: Stange
- 11.2: Stange

- 12: Gelenk
- 13: Lenker
- 13.1: Lenkerteil
- 13.2: Lenkerteil
- 14: Querlenker

- 18: Vorderachse
- 19: Hinterachse
- 20: Fahrgestell
- 21: Deichsel
- 21.1: Deichselstange

- 21.2: Deichselstange
- 21.3: Feder/Blattfeder
- 21.4: Federaufnahme
- 23: Lenker
- 23.1: Schenkel
- 23.2: Schenkel
- 23.3: Gelenk
- 30: Aufbau
- 31: Boden
- 31.1: vorderes Bodenteil

- 31.2: mittleres Bodenteil
- 31.3: hinteres Bodenteil
- 32: Längsseite
- 33: Querseite
- 33.1: Hälfte

- 33.2: Hälfte
- 34: Längsseite
- 35: Querseite
- 35.1: Hälfte
- 35.2: Hälfte

- 36.1: erstes Scharnier
- 36.2: zweites Scharnier
- 36.3: drittes Scharnier
- 36.4: viertes Scharnier
- 36.5: fünftes Scharnier

- 37: Schlitten
- 37.1: Schiene/Schlittenteil
- 37.2: Schiene/Schlittenteil
- 37.3: Schlitz
- 37.4: Schlitz
- 38: Blattfeder
- 39: Kutschbock
- 40: Aufbau
- 40.1: vorderes Teil/Aufbauteil
- 40.2: hinteres Teil/Aufbauteil

- 40.3: Unterseite
- 48: Blattfeder/Feder
- 60: Gehäuseabdeckung
- 61: Getriebeglied/Zahnrad
- 62: Getriebeglied/Zahnrad

- 63: Zahnrad
- 64: Hebel
- 65.1: Zapfen
- 65.2: Zapfen
- 66.1: Anschlag

- 66.2: Anschlag
- 67.1: Lenker
- 67.2: Lenker
- 68: Scheibe
- 69: Scheibe

- D₁: Drehachse
- D₂: Drehachse
- F: Fahrtrichtung
- H: Hochachse
- H₁: Hochachse
- H₂: Hochachse
- P: Paar
- P₁: Paar
- P₂: Paar
- S: Spurweite

- S₁: Spurweite
- S2: Spurweite
- H₂: Hochachse
- P: Paar
- P₁: Paar
- P₂: Paar
- S: Spurweite

- S₁: Spurweite
- S₂: Spurweite

## Patentansprüche

1. Kutsche mit einem Fahrgestell (20), einem Aufbau (40), einer Deichsel (21) und mindestens einem Paar (P) am Fahrgestell (20) angeordneter Räder (1, 2), die in einer Spurweite (S) zueinander beabstandet sind, **dadurch gekennzeichnet, dass** jedes Rad (1, 2) an je einem Lenker (23) drehbar gelagert ist, der um jeweils eine Hochachse (H₁) schwenkbar am Fahrgestell (20) befestigt ist, sodass jedes Rad (1,2) zum Transport der Kutsche aus einer in Fahrtrichtung (F) weisenden ersten Position in eine quer zur Fahrtrichtung (F) weisenden zweiten Position schwenkbar ist.

2. Kutsche nach Anspruch 1, **dadurch gekennzeichnet, dass** die Lenker (23) in dieselbe Richtung verschwenkbar sind.

3. Kutsche nach einem der vorstehenden Ansprüche, **dadurch gekennzeichnet, dass** die Lenker (23) gekröpft sind.

4. Kutsche nach Anspruch 3, **dadurch gekennzeichnet, dass** jeder Lenker (23) mit zwei Schenkeln (23.1, 23.2) ausgebildet und auf einem Getriebeglied (61, 62) befestigt ist, und zwei Getriebeglieder (61, 62) über mindestens ein drittes Getriebeglied (63, 64) miteinander gekoppelt sind.

5. Kutsche nach Anspruch 4, **dadurch gekennzeichnet, dass** die Getriebeglieder (61, 62, 63) Zahnräder sind.

6. Kutsche nach Anspruch 4 oder 5, **dadurch gekennzeichnet, dass** die Getriebeglieder (61, 62, 63) von einem Gehäuse (60) abgedeckt sind.

7. Kutsche nach Anspruch 4, **dadurch gekennzeichnet, dass** die Getriebeglieder (61, 62) Scheiben sind, die über zwei parallel zueinander angeordnete Lenker (67.1, 67.2) miteinander gekoppelt sind.

8. Kutsche nach einem der Ansprüche 2 bis 7, **dadurch gekennzeichnet, dass** der Aufbau (40) mehrteilig, insbesondere zweiteilig ausgebildet ist und ein erstes Aufbauteil (40.1) schwenkbar an einem zweiten Aufbauteil (40.2) befestigt ist.

9. Kutsche nach einem der vorstehenden Ansprüche, **dadurch gekennzeichnet, dass** die Deichsel (11, 21) lösbar am Fahrgestell (10, 20) angeordnet ist.

10. Kutsche nach einem der Ansprüche 4 bis 9, **dadurch gekennzeichnet, dass** die Schenkel (23.1, 23.2) über ein Gelenk (23.3) miteinander verbunden sind.

11. Kutsche nach Anspruch 10, **dadurch gekennzeichnet, dass** zwischen einem der Schenkel (23.2) und dem Aufbau (40) eine Feder (48) angeordnet ist.

12. Kutsche nach einem der vorstehenden Ansprüche, **dadurch gekennzeichnet, dass** beide Lenker (23) in dieselbe Richtung verschwenkbar sind.

13. Kutsche nach einem der vorstehenden Ansprüche, **dadurch gekennzeichnet, dass** die Räder (1, 2) zum Transport der Kutsche an der in Fahrtrichtung (F) vorderen bzw. hinteren Seite des Aufbaus (40) anliegen.

## Claims

1. Carriage comprising a chassis (20), a superstructure (40), a drawbar (21) and at least one pair (P) of wheels (1, 2) which are arranged on the chassis (20) and spaced apart from each other at a track width (S),
**characterized in that** each wheel (1, 2) is rotatably mounted on a respective link (23), which is fixed to the chassis (20) such that it can be pivoted respectively about a vertical axis (H₁), so that each wheel (1, 2) can be pivoted from a first position, pointing in the direction of travel (F) into a second position, pointing transversely with respect to the direction of travel (F), for the transport of the carriage.

2. Carriage according to Claim 1, **characterized in that** the links (23) can be pivoted in the same direction.

3. Carriage according to one of the preceding claims,
**characterized in that** the links (23) are angled.

4. Carriage according to Claim 3, **characterized in that** each link (23) is formed with two limbs (23.1, 23.2) and is fixed to a gear element (61, 62), and two gear elements (61, 62) are coupled to each other via at least a third gear element (63, 64).

5. Carriage according to Claim 4, **characterized in that** the gear elements (61, 62, 63) are gear wheels.

6. Carriage according to Claim 4 or 5, **characterized in that** the gear elements (61, 62, 63) are covered by a housing (60) .

7. Carriage according to Claim 4, **characterized in that** the gear elements (61, 62) are discs, which are coupled to each other via two links (67.1, 67.2) arranged parallel to each other.

8. Carriage according to one of Claims 2 to 7,
**characterized in that** the superstructure (40) is formed from many parts, in particular two parts, and a first superstructure part (40.1) is pivotably fixed to a second superstructure part (40.2).

9. Carriage according to one of the preceding claims,
**characterized in that** the drawbar (11, 21) is detachably arranged on the chassis (10, 20).

10. Carriage according to one of Claims 4 to 9,
**characterized in that** the limbs (23.1, 23.2) are connected to each other via a joint (23.3).

11. Carriage according to Claim 10, **characterized in that** a spring (48) is arranged between one of the limbs (23.2) and the superstructure (40).

12. Carriage according to one of the preceding claims,
**characterized in that** the two links (23) can be pivoted in the same direction.

13. Carriage according to one of the preceding claims,
**characterized in that** for the transport of the carriage, the wheels (1, 2) rest on the front and rear side of the superstructure (40) in the direction of travel (F).

## Revendications

1. Calèche comportant un châssis (20), une superstructure (40), un timon (21) et au moins une paire (P) de roues (1, 2) qui sont disposées sur le châssis (20) et qui sont espacées l'une de l'autre par un écartement (S),
**caractérisée en ce que**
chaque roue (1, 2) est montée rotative sur un bras respectif (23) qui est fixé au châssis (20) de manière à pouvoir pivoter autour d'un axe vertical respectif (H₁), de sorte que pour le transport de la calèche chaque roue (1, 2) peut être pivotée depuis une première position dirigée dans la direction de déplacement (F) jusque dans une deuxième position dirigée transversalement à la direction de déplacement (F).

2. Calèche selon la revendication 1,
**caractérisée en ce que**
les bras (23) peuvent pivoter dans le même sens.

3. Calèche selon l'une des revendications précédentes,
**caractérisée en ce que**
les bras (23) sont coudés.

4. Calèche selon la revendication 3,
**caractérisée en ce que**
chaque bras (23) est réalisé avec deux branches (23.1, 23.2) et fixé à un organe de transmission (61, 62), et deux organes de transmission (61, 62) sont couplés l'un à l'autre par au moins un troisième organe de transmission (63, 64).

5. Calèche selon la revendication 4,
**caractérisée en ce que**
les organes de transmission (61, 62, 63) sont des roues dentées.

6. Calèche selon la revendication 4 ou 5,
**caractérisée en ce que**
les organes de transmission (61, 62, 63) sont recouverts par un boîtier (60).

7. Calèche selon la revendication 4,
**caractérisée en ce que**
les organes de transmission (61, 62) sont des disques qui sont couplés l'un à l'autre par deux bras (67.1, 67.2) disposés parallèlement l'un à l'autre.

8. Calèche selon l'une des revendications 2 à 7,
**caractérisée en ce que**
la superstructure (40) est réalisée en plusieurs parties, en particulier en deux parties, et une première partie de superstructure (40.1) est fixée de façon mobile en pivotement à une seconde partie de superstructure (40.2).

9. Calèche selon l'une des revendications précédentes,
**caractérisée en ce que**
le timon (11, 21) est disposé de façon amovible sur le châssis (10, 20).

10. Calèche selon l'une des revendications 4 à 9,
**caractérisée en ce que**
les branches (23.1, 23.2) sont reliées l'une à l'autre par une articulation (23.3).

11. Calèche selon la revendication 10,
**caractérisée en ce que**
un ressort (48) est disposé entre l'une des branches (23.3) et la superstructure (40).

12. Calèche selon l'une des revendications précédentes,
**caractérisée en ce que**
les deux bras (23) peuvent pivoter dans le même sens.

13. Calèche selon l'une des revendications précédentes,
**caractérisée en ce que**
les roues (1, 2) destinées à transporter la calèche s'appuient contre le côté de la superstructure (40) avant ou arrière en direction de déplacement (F).
